(19) Europäisches Patentamt
European Patent Office
Office européen des brevets

(11) **EP 4 635 669 A1**

(12) **EUROPEAN PATENT APPLICATION**
published in accordance with Art. 153(4) EPC

(43) Date of publication:
**22.10.2025 Bulletin 2025/43**

(21) Application number: **22968406.3**

(22) Date of filing: **13.12.2022**

(51) International Patent Classification (IPC):
**B23K 15/00** (2006.01)

(52) Cooperative Patent Classification (CPC):
**B23K 15/00**

(86) International application number:
**PCT/JP2022/045814**

(87) International publication number:
**WO 2024/127494 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NIPPON STEEL CORPORATION**
**Chiyoda-ku**
**Tokyo 100-8071 (JP)**

(72) Inventors:
• **HONMA, Ryuichi**
**Tokyo 100-8071 (JP)**
• **SHINOHARA, Yasuhiro**
**Tokyo 100-8071 (JP)**
• **NAGAI, Yoshihide**
**Tokyo 100-8071 (JP)**

(74) Representative: **Zimmermann & Partner**
**Patentanwälte mbB**
**P.O. Box 330 920**
**80069 München (DE)**

(54) **WELDED JOINT AND WELDING STRUCTURE**

(57)     A welded joint includes a welded metal, the welded metal has a predetermined chemical composition, the average crystal grain size of the metal microstructure is 30.0 to 150.0 $\mu$m, the welded metal contains an Mn-enriched inclusion, which is an inclusion having the content of Mn higher than the content of Mn in a base metal, the size of the Mn-enriched inclusion is 0.1 to 1.0 $\mu$m in equivalent circle diameter, and the number density of the Mn-enriched inclusion is 30 to 2000 /mm$^2$, and the bead width is 7.0 mm or less at a position of 1/2 of a penetration depth d of the welded metal in a plane perpendicular to a welding progression direction.

FIGURE 2

EP 4 635 669 A1

# EP 4 635 669 A1

**Description**

TECHNICAL FIELD

The present disclosure relates to a welded joint and a welded structure.

BACKGROUND ART

The electron beam welding has an advantage that the welding rate is high, compared with the arc welding commonly used. The electron beam welding further has an advantage that since the heat input range is small, the heat deformation is small, and a deflection or the like that occurs in the welded joint and welded structure after welding need not be deformed or straightened.

In recent years, the performance of the welding machine that performs electron beam welding has been markedly improved. For example, electron beam welding machines of the local ventilation type, which need no vacuum chamber, have been developed. The welding conditions of these welding machines can be fully automatically controlled. As a result, for example, know-how and high welding skills required for performing the arc welding are not necessary, and simplification of factories and savings in labor can be achieved.

Therefore, it is desired to adapt the electron beam welding to welding of thick plates. On the other hand, the electron beam welding has a disadvantage that the hardness and toughness of the molten metal is difficult to control. The electron beam welding is a welding method in which the base metals for joint are welded by being once molten by the energy of the electron beam and then solidified. Therefore, the chemical composition of the welded metal cannot be adjusted with welding wire or the like, unlike the high heat input arc welding, such as the submerged-arc welding, for example.

In view of this, for example, Patent Document 1 discloses an electron beam welded joint in which the hardness of the welded metal zone is more than 110% and 220% or less of the hardness of the base metal, and the width of the welded metal zone is 20% or less of the plate thickness of the base metal zone. Patent Document 2 discloses an electron beam welded joint in which the amount of O in the welded metal is 20 ppm or more and the amount of oxides having a grain size of 2.0 $\mu$m or more is 10 /mm$^2$ or less. In this way, the welded joints described in Patent Documents 1 and 2 are improved in toughness by optimizing the hardness and index of cleanliness of the welded metal zone (referred to also as WM).

Patent Document 3 discloses an electron beam welded joint in which the balance of the fracture toughness value is optimized in the welded metal zone and the welded heat affected zone. In the welded joint disclosed in Patent Document 3, CeEB, which is a kind of carbon equivalent, is optimized in the welded metal zone, the base metal contains 10% or more of Ti, and the number of oxide grains having a size of 0.05 $\mu$m or more and less than 0.5 $\mu$m is limited to a predetermined range.

LIST OF PRIOR ART DOCUMENTS

PATENT DOCUMENT

Patent Document 1: JP2007-21532A
Patent Document 2: JP2008-88504A
Patent Document 3: WO2021/070354

SUMMARY OF INVENTION

TECHNICAL PROBLEM

However, the welded joints disclosed in Patent Documents 1 to 3 have problems that optional elements need to be added, and in the deoxidation step O needs to be reduced at a high level, so that it is difficult to use the conventional electron beam welding. In addition, the toughness of the welded joint manufactured by electron beam welding is affected by not only the toughness of the welded heat affected zone (referred to also as HAZ, hereinafter) but also the toughness of the welded metal, for example. On the other hand, the welded joints disclosed in Patent Documents 1 to 3 are not adequately examined in terms of toughness of the welded metal. Therefore, the welded joints can be further improved in toughness of the welded metal.

An objective of the present disclosure is to solve the problem described above and provide a welded joint that has a chemical composition that allows manufacturing at low cost and is improved in toughness of a welded metal and thus in toughness of the whole of the welded joint.

SOLUTION TO PROBLEM

The present disclosure has been made to solve the problem described above and the gist of the present disclosure is the welded joint and the welded structure described below.
(1) A welded joint, including:

a welded metal; and
a base metal,
wherein a chemical composition of the welded metal consists of, in % by mass,
C: 0.045 to 0.100%,
Si: 0.15 to 0.50%,
Mn: 1.50 to 2.50%,
P: 0.015% or less,
S: 0.0010 to 0.0035%,
Ti: 0.003 to 0.015%,
N: 0.0010 to 0.0060%,
O: 0.0005 to 0.0030%,
Al: 0 to 0.004%,
Nb: 0 to 0.020%,
V: 0 to 0.050%,
Cr: 0 to 0.50%,
Mo: 0 to 0.50%,
Cu: 0 to 1.00%,
Ni: 0 to 1.00%,
B: 0 to 0.0020%,
Sn: 0 to 0.25%,
W: 0 to 0.50%, and
the balance: Fe and an impurity,
CeEBW calculated according to a following formula (i) is 0.56 to 0.73,
an average crystal grain size of the metal micro-structure is 30.0 to 150.0 $\mu$m,
the welded metal contains an Mn-enriched inclusion, which is an inclusion having a content of Mn higher than a content of Mn in the base metal,
a size of the Mn-enriched inclusion is 0.1 to 1.0 $\mu$m in equivalent circle diameter, and a number density of the Mn-enriched inclusion is 30 to 2000 /mm$^2$,
a bead width is 7.0 mm or less at a position of 1/2 of a penetration depth d of the welded metal in a plane perpendicular to a welding progression direction, and

$$CeEBW = C+1/4Mn+1/15Cu+1/15Ni+1/5Cr+1/5Mo+1/5V \ldots (i)$$

where each symbol of element denotes a content, in % by mass, of the element contained in the welded metal and assumes 0 if the element is not contained.

(2) The welded joint according to (1) described above, wherein a thickness of the base metal is 45 to 150 mm.
(3) The welded structure, including the welded joint according to (1) or (2) described above.

ADVANTAGEOUS EFFECTS OF INVENTION

A welded joint can be provided which is manufactured by using electron beam welding, has a chemical composition that allows manufacturing at low cost and is improved in toughness of a welded metal and thus in toughness of the whole of the welded joint.

BRIEF DESCRIPTION OF DRAWINGS

[Figure 1] Figure 1 includes front views (cross-sectional views perpendicular to a welding direction) schematically showing a welding method in a case where an insert metal is used.
[Figure 2] Figure 2 is a diagram schematically showing a welding progression direction and a welding cross section.
[Figure 3] Figure 3 is a diagram schematically showing a welding cross section in a case of full penetration welding.
[Figure 4] Figure 4 is a diagram schematically showing a welding cross section in a case of partial penetration welding.

DESCRIPTION OF EMBODIMENTS

The inventors have fabricated a welded joint by electron beam welding, examined the toughness and made the following findings.

In the case of electron beam welding, the toughness of the welded joint significantly depends on the toughness of the welded metal, although the toughness of the welded joint also depends on the base metal and the toughness of HAZ. Therefore, when the toughness of the welded metal is low, the toughness of the whole of the welded joint may be low. In view of this, the inventors have focused on increasing the toughness of the welded metal.

The toughness of the welded metal can be increased by forming a predetermined inclusion in the welded metal. Specifically, the toughness of the welded metal is improved by forming an inclusion (referred to also as an "Mn-enriched inclusion", hereinafter) having a content of Mn higher than the content of Mn in the base metal and forming fine intragranular ferrite around Mn-enriched inclusions as cores.

This mechanism is as follows. When the Mn-enriched inclusion is formed, the concentration of Mn of an austenite phase around the inclusion relatively decreases, and an Mn-depleted zone, which is poor in Mn, is formed. When the Mn-depleted zone is formed, the transformation temperature from the austenite phase to the ferrite phase increases. As a result, fine ferrite grains are formed around Mn-enriched inclusions as cores. The ferrite grains having an Mn-enriched inclusion as a core are finer than ferrite grains generated from an austenite grain boundary. Therefore, if a large amount of Mn-enriched inclusion is generated in the welded metal, fine ferrite grains formed around the inclusions as cores can occupy a large part of the welded metal and reduce generation of coarse ferrite grains from the austenite grain boundary. As a result, the metal micro-structure of the welded metal is refined, and the toughness can be ensured.

In order to form the Mn-enriched inclusion, the content of Si, Mn, Al and Ti needs to be controlled within an appropriate range. By controlling the content of these elements within an appropriate range, a sufficient amount of Mn-enriched inclusion can be obtained. In particular, Si improves the toughness of the welded metal, although Si reduces the toughness of the base metal and HAZ. Therefore, the content of Si is 0.15% or more.

An embodiment of the present disclosure is based on the findings described above. In the following, requirements of this embodiment will be described in detail.

1. Configuration of welded joint

A welded joint according to this embodiment includes a welded metal and a base metal. The welded joint further includes a welding heat affected zone in addition to the welded metal and the base metal. The "welded metal" means a part of the base metal that is melted by heat input during welding into molten metal, which then solidifies. The "base metal" means a part having the same chemical composition, metal micro-structure and other characteristics as those of the base metal for joint before welding. The welding heat affected zone (referred to also as HAZ), which is a part that is not melted but is affected by the welding heat, is not regarded as being included in the base metal in the welded joint according to this embodiment, although the welding heat affected zone is typically regarded as being included in the base metal.

The welded joint according to this embodiment is a joint welded by electron bean welding. In the electron beam welding, steel materials in contact with each other are irradiated with an electron beam, thereby melting and bonding the steel materials. With the welded joint according to this embodiment, as described above, the electron beam welding has only to be partially used for forming the welded joint, and the full penetration welding (referred to also as full penetration), which penetrates steel materials, or the partial penetration welding (referred to also as partial), which weld only part of steel materials, may be used.

Note that in the case of the partial penetration welding, the surfaces of the steel materials on one side may be welded by the electron beam welding, and the surfaces of the steel materials on the other side may be welded in another welding method. When the electron beam welding is performed, the bead width of the welded joint is small. As described later, the bead width is 7.0 mm or less. Without the electron beam welding, typically, the bead width of 7.0 mm or less is impossible.

In the electron beam welding, a metal referred to as an insert metal may be inserted between steel materials at the bonding interface for welding. With the welded joint according to this embodiment, however, the insert metal may or may not be used. When the insert metal is not used for welding, the base metal and the welded metal have substantially the same chemical compositions. However, some elements, such as Mn, O and N, may evaporate from the base metal during welding, and the content thereof may decrease. Therefore, the content of these elements may differ between the base metal and the welded metal.

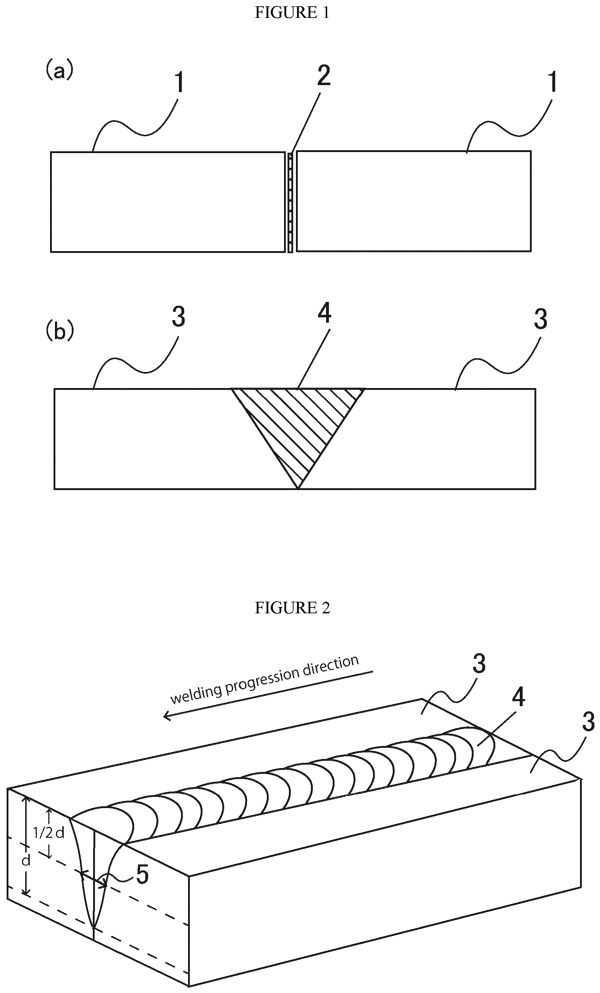

Figure 1 schematically shows a welding method in the case where the insert metal is used. When the insert metal is used, as shown in the front view (a cross-sectional view perpendicular to the welding direction) of Part (a) of Figure 1, an insert metal 2 having a thickness of 10 to 100 $\mu$m is inserted and fixed between materials (steel materials) 1 of a welded joint and is subjected to the electron beam welding, thereby integrating and bonding the base metals for joint 1 and the insert metal 2 as shown in the front view (a cross-sectional view perpendicular to the welding direction) of Part (b) of Figure 1. In this way, a welded joint including a base metal 3 and a welded metal 4 can be provided.

When the insert metal is used for welding, the chemical composition of the welded metal varies with the chemical composition of the insert metal, and therefore, the welded metal and the base metal may have different chemical compositions. Note that even when the insert metal is used, formation of the Mn-enriched inclusion described later is not significantly affected. It is essential only that the chemical composition of the welded metal and other inclusions meet the range requirements described below. Note that the insert metal is a foil of Ni, for example. By using the foil of Ni or the like, the transformation temperature from the austenite phase to the ferrite phase can be adjusted.

2. Chemical composition of welded metal

Limitation reasons for elements of the welded metal are as follows. Note that in the following description, the unit "%" of the content means "% by mass". In addition, "A to B" (where A and B denote a numeric value of content, temperature or the like) means "A or more and B or less".

C: 0.045 to 0.100%

C (carbon) is an element that is required to ensure the strength of the welded metal and the welded structure itself. Therefore, the content of C is 0.045% or more. The content of C is preferably 0.050 or more. However, if C is excessively contained, the hardenability excessively increases, and the toughness decreases. Therefore, the content of C is 0.100% or less. The content of C is preferably 0.090% or less and more preferably 0.080% or less.

Si: 0.15 to 0.50%

Si (silicon) is a deoxidizing element and has an effect of ensuring the strength of a steel material. In addition, with a joint manufactured by electron beam welding, Si has an effect of increasing the number of Mn-enriched inclusions and making the grain size finer, thereby improving the toughness of the welded metal. Therefore, the content of Si is 0.15% or more. The content of Si is preferably 0.18% or more and more preferably 0.20% or more. However, if Si is excessively contained, a large amount of martensite islands is generated. As a result, the toughness of the welded metal decreases. Therefore, the content of Si is 0.50% or less. The content of Si is preferably 0.48% or less and more preferably 0.45% or less.

Mn: 1.50 to 2.50%

Mn (manganese) has an effect of ensuring the toughness and enhancing the hardenability. In addition, Mn is evaporated from the molten metal and partially lost during welding, so that a sufficient amount of Mn needs to be contained. Therefore, the content of Mn is 1.50% or more. The content of Mn is preferably 1.60% or more, more preferably 1.70% or more and even more preferably 1.80% or more.

However, if Mn is excessively contained, the hardenability excessively increases, and the toughness of the welded metal markedly decreases. Therefore, the content of Mn is 2.50% or less. The content of Mn is preferably 2.40% or less and more preferably 2.30% or less.

P: 0.015% or less

P (phosphorus) is an impurity contained in the welded metal and adversely affects the toughness of the welded metal. Therefore, the content of P is 0.015% or less. The content of P is preferably 0.010% or less and more preferably 0.006% or less. Although the content of P is preferably decreased as far as possible, excessively decreasing P leads to an increase of the manufacturing cost. Therefore, the content of P is preferably 0.001% or more.

S: 0.0010 to 0.0035%

S (sulfur) is an impurity contained in the welded metal and is a constituent element of MnS. MnS is a compound forming the Mn-enriched inclusion and forms an Mn-depleted zone. As a result, fine intragranular ferrite is formed. Therefore, the content of S is 0.0010% or more. The content of S is preferably 0.0015% or more. However, if S is excessively contained, the toughness of the welded metal markedly decreases. Therefore, the content of S is 0.0035% or less. The content of S is preferably 0.0030% or less and more preferably 0.0025% or less.

Ti: 0.003 to 0.015%

Ti (titanium) is a deoxidizing element. Ti has an effect of forming fine intragranular ferrite when Ti in the form of an oxide is contained in the Mn-enriched inclusion in the welded metal during welding. Therefore, the content of Ti is 0.003% or more. The content of Ti is preferably 0.005% or more and more preferably 0.007% or more. However, if Ti is excessively contained, coarse TiN is generated, and the toughness degrades. Therefore, the content of Ti is 0.015% or less. The content of Ti is preferably 0.012% or less.

N: 0.0010 to 0.0060%

N (nitrogen) is an element that combines with Ti to form TiN, which reduces coarsening of grains. Therefore, the content of N is 0.0010% or more. The content of N is preferably 0.0020% or more and more preferably 0.0030% or more. However, if N is excessively contained, the toughness of the welded metal decreases. Therefore, the content of N is 0.0060% or less. The content of N is preferably 0.0050% or less. Note that if the electron beam welding is performed under common conditions, a certain amount of the content of N in the base metal for joint (steel material) is often lost in the welded metal during the process of the electron beam welding. Therefore, the content of N in the steel material is preferably 0.0015% or more so that the content of N in the welded metal is adjusted.

O: 0.0005 to 0.0030%

O (oxygen) is an element that combines with Ti and is contained in the Mn-enriched inclusion that serves as a generation core in the intragranular transformation. In addition, O has an effect of improving the toughness of the welded metal. Therefore, the content of O is 0.0005% or more. The content of O is preferably 0.0007% or more and more preferably 0.0009% or more. However, if O is excessively contained, oxide, at which brittle fracture occurs, is excessively generated, and the toughness of the welded metal is adversely affected. Therefore, the content of O is 0.0030% or less. The content of O is preferably 0.0028% or less and more preferably 0.0025% or less.

Note that if the electron beam welding is performed under common conditions, about a half of the content of O in the base metal for joint (steel material) is often lost in the welded metal during the process of the electron beam welding. Therefore, the content of O in the steel material is preferably 0.0010% or more so that the content of O in the welded metal is adjusted. On the other hand, oxide may be excessively generated in the steel material depending on the condition such as the composition or the manufacturing process, and therefore, the content of O in the steel material is preferably 0.0030% or less so that the content of O in the welded metal is adjusted. In this case, the content of O in the welded metal can be adjusted to 0.0030% or less with reliability.

Al: 0 to 0.004%

Al (aluminum) is a strong deoxidizing element and prevents generation of the Mn-enriched inclusion that improves the toughness. Therefore, the content of Al is 0.004% or less. The content of Al is preferably 0.003% or less and more preferably 0.002% or less. The content of Al is preferably decreased as far as possible. On the other hand, when Al is used as a deoxidizer, the content of Al is preferably 0.001% or more.

In addition to the elements described above, one or more selected from among Nb, V, Cr, Mo, Cu, Ni, B, Sn and W may be contained in the amounts described below. That is, 0% or more of one or more of these elements may be contained. Limitation reasons for the elements will be described.

Nb: 0 to 0.020%

Nb (niobium) has an effect of improving the hardenability of the welded metal and increasing the strength. Therefore, Nb can be contained as required. However, if Nb is excessively contained, the toughness of the welded metal decreases. Therefore, the content of Nb is 0.020% or less. The content of Nb is preferably 0.012% or less and more preferably 0.010% or less. On the other hand, in order to achieve the effect described above, the content of Nb is preferably 0.001% or more and more preferably 0.003% or more.

V: 0 to 0.050%

V (vanadium) has an effect of increasing the hardenability and the temper softening resistance. Therefore, V can be contained as required. However, if V is excessively contained, the toughness of the welded metal decreases. Therefore, the content of V is 0.050% or less. The content of V is preferably 0.045% or less and more preferably 0.030% or less. On the other hand, in order to achieve the effect described above, the content of V is preferably 0.005% or more and more preferably 0.010% or more.

Cr: 0 to 0.50%

Mo: 0 to 0.50%

Cu: 0 to 1.00%

Ni: 0 to 1.00%

Cr (chromium) has an effect of improving the toughness and strength of the welded metal. Therefore, Cr can be contained as required. However, if Cr is excessively contained, the manufacturing cost increases, and the hardenability may excessively increase and disturb the balance of the toughness. Therefore, the content of Cr is 0.50% or less. On the other hand, in order to achieve the effect described above, the content of Cr is preferably 0.05% or more.

Similarly, Mo (molybdenum) has an effect of improving the toughness and strength of the welded metal. Therefore, Mo can be contained as required. However, if Mo is excessively contained, the manufacturing cost increases, and the hardenability may excessively increase and disturb the balance of the toughness. Therefore, the content of Mo is 0.50% or less. On the other hand, in order to achieve the effect described above, the content of Mo is preferably 0.05% or more.

Similarly, Cu (copper) has an effect of improving the toughness and strength of the welded metal. Therefore, Cu can be contained as required. However, if Cu is excessively contained, the manufacturing cost increases, and the hardenability may excessively increase and disturb the balance of the toughness. Therefore, the content of Cu is 1.00% or less. The content of Cu is preferably 0.50% or less. On the other hand, in order to achieve the effect described above, the content of Cu is preferably 0.05% or more.

Similarly, Ni (nickel) has an effect of improving the toughness and strength of the welded metal. Therefore, Ni can be contained as required. However, if Ni is excessively contained, the manufacturing cost increases, and the hardenability may excessively increase and disturb the balance of the toughness. Therefore, the content of Ni is 1.00% or less. On the other hand, in order to achieve the effect described above, the content of Ni is preferably 0.05% or more.

Note that since Cr, Mo, Cu and Ni are elements having similar effects, the total content of Cr, Mo, Cu and Ni is preferably 0.70% or less. The total content of Cr, Mo, Cu and Ni is more preferably 0.50% or less, even more preferably 0.40% or less, and still even more preferably 0.30% or less, and extremely preferably 0.20% or less.

B: 0 to 0.0020%

B (boron) has an effect of substantially improving the hardenability even in small amounts and is effective in a case where the cooling rate is difficult to ensure. Therefore, B can be contained as required. However, if B is excessively contained, cracks are likely to occur in the welded metal. Therefore, the content of B is 0.0020% or less. The content of B is preferably 0.015% or less and more preferably 0.0010% or less. On the other hand, in order to achieve the effect described above, the content of B is preferably 0.0003% or more.

Sn: 0 to 0.25%

Sn (tin) substantially improves the corrosion resistance of the welded metal and therefore can be contained as required. However, if Sn is excessively contained, the effect becomes saturated, and the toughness of the welded metal decreases. Therefore, the content of Sn is 0.25% or less. The content of Sn is preferably 0.18% or less and more preferably 0.16% or less. On the other hand, in order to achieve the effect described above, the content of Sn is preferably 0.03% or more.

W: 0 to 0.50%

W (tungsten) has an effect of improving the strength of the welded metal. Therefore, W can be contained as required. However, if W is excessively contained, the effect becomes saturated, and the toughness of the welded metal decreases. Therefore, the content of W is 0.50% or less. The content of W is preferably 0.47% or less and more preferably 0.44% or less. On the other hand, in order to achieve the effect described above, the content of W is preferably 0.03% or more.

In the chemical composition of the welded metal in this embodiment, the balance consists of Fe and impurities. The "impurity" here means a constituent that is mixed with the welded metal because of various factors such as raw materials and the manufacturing process during the production of welded joints and is allowable as far as the impurity has no adverse effect in this embodiment. Note that Mg (magnesium), Ca (calcium), REM (rare earth metal) or Zr (zirconium) is contained as an impurity, the content thereof is preferably 0.001% or less, and the total content of these elements is preferably 0.001% or less.

Furthermore, in the chemical composition of the welded metal, CeEBW, which is a molten part hardenability index, falls within a range of 0.56 to 0.73. Here, the molten part hardenability index is an index of the hardenability of the welded metal during electron beam welding. The hardenability is important for ensuring the toughness, so that CeEBW can be said to be an index of the degree of toughness of the welded metal. Note that CeEBW is calculated according to the following formula (i).

$$CeEBW = C + 1/4Mn + 1/15Cu + 1/15Ni + 1/5Cr + 1/5Mo + 1/5V \ldots (i)$$

In this formula, each symbol of element denotes the content (in % by mass) of the element contained in the welded metal and assumes 0 if the element is not contained.

When CeEBW is less than 0.56, the transformation temperature is high. Therefore, generation and growth of coarse ferrite from the austenite grain boundary are dominant over generation of intragranular ferrite caused by the Mn-enriched inclusion. As a result, the welded metal is formed by coarse grains, and the toughness decreases. Therefore, CeEBW is 0.56 or more. The CeEBW is preferably 0.58 or more and more preferably 0.60 or more. On the other hand, when CeEBW is more than 0.73, the toughness of the welded metal decreases. Therefore, the CeEBW is 0.73 or less. CeEBW is preferably 0.71 or less and more preferably 0.69 or less.

Note that although the chemical composition of the base metal of the welded joint in this embodiment is not particularly limited, the base metal desirably has the following chemical composition, for example.

The chemical composition of the base metal may contain, in % by mass, C: 0.045 to 0.100%, Si: 0.15 to 0.50%, Mn: 1.30 to 2.80%, P: 0.015% or less, S: 0.0010 to 0.0035%, Ti: 0.003 to 0.015%, N: 0.0005 to 0.0070%, O: 0.0004 to 0.0045%, and Al: 0 to 0.004%, and further contain Nb: 0.020% or less, V: 0.050% or less, Cr: 0.50% or less, Mo: 0.50% or less, Cu: 1.00% or less, Ni: 1.00% or less, B: 0.0020% or less, Sn: 0.25% or less and W: 0.50% or less, as required. Note that the balance consists of Fe and impurities. That is, except for Mn, N and O, the chemical compositions of the base metal and the welded metal preferably fall within the same range.

3. Metal micro-structure and average crystal grain size of welded metal

With the welded joint according to this embodiment, the metal micro-structure of the welded metal is primarily formed by ferrite, and bainite may be further generated in the welded metal. That is, the metal micro-structure of the welded metal is preferably a micro-structure containing 85% or more in the area fraction of ferrite. The reason is that when the area fraction of ferrite is less than 85%, the toughness of the welded metal decreases, and thus, the toughness of the welded joint itself may also be more likely to decrease.

The ferrite mentioned here is the so-called intragranular ferrite, and the average crystal grain size of the welded metal is 30.0 to 150.0 μm. For reasons of manufacturing, the entire metal micro-structure is not necessarily formed by intragranular ferrite and may inevitably include a micro-structure other than ferrite. On the other hand, a micro-structure other than intragranular ferrite, such as bainite, coarse ferrite generated from the austenite grain boundary or martensite, does not affect the characteristics of the welded joint, as far as the area fraction thereof is less than 15.0%.

As described above, a large amount of fine intragranular ferrite is formed around Mn-enriched inclusions as cores, and thus, generation of coarse ferrite having an average crystal grain size of more than 150.0 μm is suppressed. The amount of generation of intragranular ferrite depends on the welding conditions, in particular, the welding rate, and the higher the welding rate, the more intragranular ferrite is generated. As the amount of generation of intragranular ferrite decreases, the coarse ferrite increases accordingly, the crystal grain size of the whole of the metal micro-structure increases, and the toughness degrades. Therefore, the average crystal grain size of the welded metal is 150.0 μm or less. The average crystal grain size is preferably 140.0 μm or less and more preferably 130.0 μm or less. On the other hand, the grain size of the intragranular ferrite is typically very small, so that the average crystal grain size is 30.0 $\mu$m or more. The average crystal grain size is preferably 40.0 $\mu$m or more and more preferably 50.0 $\mu$m or more.

Note that the average crystal grain size of the welded metal is measured in the following procedure. A field emission scanning electron microscope (FE-SEM) and electron back scattered diffraction (EBSD) associated therewith are used. Here, provided that the thickness of the base metal in a plane perpendicular to a welding progression direction is denoted by t, five images of a cross-section micro-structure of the welded metal are captured with a field of view of 250 $\mu$m$\times$ 200 $\mu$m with the center of the field of view located at 1/2t. From the obtained data, using image analysis software, a range defined by 15° high angle grain boundaries is defined as an effective crystal grain, and the average crystal grain size is calculated by arithmetic averaging of equivalent circle diameters calculated from the area of effective crystal grains. The area fraction of ferrite is calculated in the same manner.

4. Mn-enriched inclusion

With the welded joint according to this embodiment, when melting and bonding materials, an Mn-enriched inclusion, which has a higher concentration of Mn, is advantageously formed in the welded metal. By forming such an inclusion, diffusion of Mn from the base phase to the Mn-enriched inclusion occurs in the process of cooling of the welded metal, and an Mn-depleted zone, which has a relatively reduced concentration of Mn, is formed. The Mn-depleted zone has a size of the order of several hundred nm and has a higher transformation temperature from the austenite phase to the ferrite phase than a zone in which the concentration of Mn is not reduced. As a result, intragranular transformed ferrite having a different crystal orientation than the base phase is likely to be generated, so that the Mn-depleted zone has a fine ferrite micro-structure. Thus, the toughness of the welded metal is improved, and the toughness of the welded joint is improved.

In view of the above description, the welded joint according to this embodiment includes an Mn-enriched inclusion in the welded metal. Here, the "Mn-enriched inclusion" means an inclusion having a content of Mn that is higher than the content of Mn in the base metal. In addition, the size of the Mn-enriched inclusion is 0.1 to 1.0 $\mu$m in equivalent circle diameter.

Note that if the content of Mn in the inclusion is lower than that in the base metal, the Mn-depleted zone described above does not occur, and fine ferrite micro-structures are less likely to be formed. Therefore, the Mn-enriched inclusion has a higher content of Mn than the base metal. Note that the "content of Mn in the base metal" means an average content of Mn contained in the base metal.

In many cases, the Mn-enriched inclusion is a complex compound of an Mn compound, such as MnS, and an oxide, such as Ti oxide. The "oxysulfide" described above means a compound containing at least one of O and S, such as Si-Mn oxide (such as amorphous Si-Mn oxide, $MnSiO_3$ or $Mn_2SiO_4$), Mn-containing oxide (such as $Ti_2O_3$ or $Ti_3O_5$), Al-Mn oxide (such as $MnAl_2O_4$) or MnS, and may be a complex compound containing a plurality of these compounds.

Furthermore, the size of the Mn-enriched inclusion described above falls within a range of 0.1 to 1.0 $\mu$m in equivalent circle diameter. If the size of the Mn-enriched inclusion is less than 0.1 $\mu$m in equivalent circle diameter, the Mn-enriched inclusion is less likely to serve as a core generation site for intragranular transformed ferrite. As a result, the toughness improvement effect is less likely to be achieved. Therefore, the size of the Mn-enriched inclusion is 0.1 $\mu$m or more and is preferably 0.3 $\mu$m or more in equivalent circle diameter. If the size of the Mn-enriched inclusion is more than 1.0 $\mu$m in equivalent circle diameter, fracture is likely to occur at the Mn-enriched inclusion, and the toughness of the welded metal decreases. Therefore, the size of the Mn-enriched inclusion is 1.0 $\mu$m or less and is preferably 0.9 $\mu$m or less in equivalent circle diameter.

5. Number density of Mn-enriched inclusion

With the welded joint according to this embodiment, the number density of the Mn-enriched inclusion described above falls within a range of 30 to 2000 /mm$^2$. If the number density of the Mn-enriched inclusion is less than 30 /mm$^2$, the fine intragranular ferrite is not sufficiently formed. As a result, the toughness improvement effect cannot be sufficiently achieved. Therefore, the number density of the Mn-enriched inclusion is 30 /mm$^2$ or more. The number density of the Mn-enriched inclusion is preferably 100 /mm$^2$ or more and more preferably 300 /mm$^2$ or more.

On the other hand, if the number density of the Mn-enriched inclusion is more than 2000 /mm$^2$, fracture occurs at the Mn-enriched inclusion itself, and the toughness of the welded metal decreases. Therefore, the number density of the Mn-enriched inclusion is 2000 /mm$^2$ or less. The number density of the Mn-enriched inclusion is preferably 1900 /mm$^2$ or less and more preferably 1850 /mm$^2$ or less.

Note that the number density and size of the Mn-enriched inclusion are measured in the following procedure. A backscattered electron image of the cross section (the cross section in which the average crystal grain size of the welded metal is measured) of the welded metal is captured with FE-SEM, and inclusions are extracted based on the contrast of the obtained image. The equivalent circle diameter and number density of the inclusions are measured. Note that in this process, the observation magnification is 1000, and 25 fields of view are observed. **In** addition, the electron beam diameter of FE-SEM is 0.1 $\mu$m.

**In** order to examine the state of each inclusion, an energy dispersive X-ray spectroscope (EDS) attached to FE-SEM is used. For each inclusion, the content of Mn is measured at ten points on the periphery of the grain, at which Mn is likely to precipitate, by point analysis, and if the content of Mn measured at at least one of the ten measurement points of an inclusion is higher than the content of Mn in the base metal, the inclusion is determined to be the Mn-enriched inclusion. From the number of the inclusions determined to be the Mn-enriched inclusion and the observation conditions, the number density of the Mn-enriched inclusion is calculated. **In** addition, the size (in equivalent circle diameter) of the inclusions determined to be the Mn-enriched inclusion is also calculated.

6. Bead width

With the welded joint according to this embodiment, in order to meet the requirements of the Mn-enriched inclusion described above, the bead width is limited to the range described below. With the welded joint according to this embodiment, the bead width (the width of the welded metal) is 7.0 mm or less at a position of 1/2 of the penetration depth d of the welded metal in the plane (the welding cross section) perpendicular to the welding progression direction. The bead width at the position is preferably 6.0 mm or less and more preferably 5.0 mm or less.

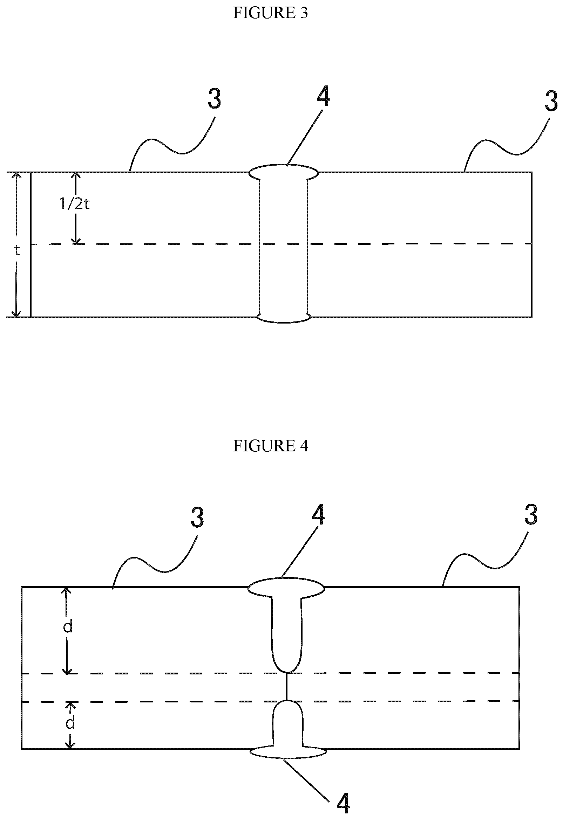

Note that as shown in Figure 2, the welding progression direction is a direction in which the electron beam moves. As shown in Figure 2, the "penetration depth d" means the depth of the deepest position to which the material is melted from the surface, and the "position of 1/2 of the penetration depth d" means the position of 1/2d. Therefore, the position of 1/2 of the penetration depth d of the welded metal in the plane perpendicular to the welding progression direction is the position of the upper dotted line in Figure 2, and a bead width 5 at this position can be measured. Note that in the case of the full penetration welding, as shown in Figure 3, the bead width at the position of 1/2t can be measured, where t denotes the thickness of base metal 3 in the welding cross section (the thickness of the base metal in the welding direction).

On the other hand, when there are two penetration depths in the partial penetration welding, as shown in Figure 4, the bead width should be 7.0 mm or less at positions of 1/2 of the penetration depths d of both the beads in a welding cross section. Note that it is essential only that the bead width is 7.0 mm or less at the position where the electron beam welding is applied, and the bead width of the welded joint at a position where welding other than the electron beam welding is not particularly limited.

Note that the bead width can be adjusted by controlling the welding rate. Specifically, the lower the welding rate, the more energy is supplied to the same position, the more of the base metal is molten, and the more likely to widen the bead width is. In addition, the cooling rate of the welded metal decreases, so that the transformation temperature of the welded metal increases. As a result, transformation to coarse ferrite from the austenite grain boundary is dominant over generation of intragranular ferrite caused by the Mn-enriched inclusion, and thus, the welded metal is formed by coarse grains, and the toughness decreases. In such a case, if the bead width is more than 7.0 mm at the position of 1/2 of the penetration depth d of the welded metal in the plane perpendicular to the welding progression direction, the cooling rate of the welded metal decreases, and the toughness decreases. Therefore, the bead width is 7.0 mm or less.

7. Evaluation of toughness of welded joint

With the welded joint according to this embodiment, an impact absorbed energy calculated in the Charpy test is preferably 70 J or more. Note that the Charpy test is performed by taking a test specimen from the base metal at the position of 1/4 of the thickness (plate thickness) thereof with the welded metal located at the center in the test specimen. **In** the Charpy impact test, a V-notched test specimen is used by forming a V-shaped notch in the center of a surface of the obtained test specimen that is perpendicular to the welding progression direction, that is, the welded metal. The size of the test specimen is 10 $\times$ 10 $\times$ 550 mm, that is, the test specimen is a full-sized test specimen. Using this V-notched test specimen, the Charpy impact test is performed at -40°C according to JIS Z 2242: 2018. The test is performed on three test specimens, and an average value (arithmetic average) of the absorbed energy is calculated as the impact absorbed energy.

8. Thickness

With the welded joint according to this embodiment, the thickness of the base metal in a welding depth direction in the welding cross section preferably falls within a range of 45 to 150 mm.

9. Welded structure

A welded structure includes the welded joint according to this embodiment. The welded structure can include the welded joint according to this embodiment as a part thereof.

10. Manufacturing method

A preferred manufacturing method for the welded joint according to this embodiment and the welded structure including the welded joint will be described. Regardless of the manufacturing method, the welded joint according to this embodiment and the welded structure can achieve the advantageous effects thereof as far as the welded joint and the welded structure have the configurations described above. However, for example, the welded joint and the welded structure can be stably manufactured in the manufacturing method described below.

A steel material, which is a material of the welded joint, is prepared. The chemical composition of the steel material is the same as the chemical composition of the base metal of the welded j oint. Therefore, the chemical composition of the steel material should meet the chemical composition of the base metal described above. Note that the manufacturing method for the steel material is not particularly limited.

The steel material can be manufactured in a common method. For example, the steel material can be manufactured under conditions described below. First, hot rolling can be performed at a heating temperature in a range of 1000 to 1250°C. The final rolling temperature during the hot rolling can be 800°C or more. The draft during the hot rolling can be appropriately adjusted according to the plate thickness. The water cooling start temperature can be in a range of 800 to 900°C, and the water cooling end temperature can be in a range of 300 to 400°C. A heat treatment of tempering may be performed in a temperature range of 350 to 600°C for 10 to 60 minutes, as required. After that, cool rolling or other heat treatment may be performed as required.

Then, the obtained steel materials are butt-welded by electron beam welding. In this process, although the steel materials abutting against each other may have different compositions, the compositions desirably meet the chemical composition of the base metal described above. Although the bevel of the steel material in the butt welding is not particularly limited, the shape of the bevel is typically the I shape. The conditions of the electron beam welding or laser welding can be appropriately adjusted according to the plate thickness of the steel materials to be butt-welded and the welding direction, for example. For example, the acceleration voltage can be in a range of 100 to 200 kV, the beam current can be in a range of 140 to 250 mA, and the welding rate can be in a range of 70 to 300 mm/min.

If the beam current is less than 140 mA, the Mn-enriched inclusion is not sufficiently formed, coarse ferrite transformation occurs, and as a result, the welded metal is formed by coarse grains. In addition, the bead width may increase. Therefore, the beam current is preferably 140 mA or more. On the other hand, if the beam current is more than 250 mA, the amount of current is excessively high, and the toughness may decrease. Therefore, the beam current is preferably 250 mA or less. Furthermore, if the welding rate is less than 70 mm/min, more of the base metal is melted, and the bead width is more likely to widen, as described above. In addition, coarse ferrite transformation occurs, and as a result, the welded metal is formed by coarse grains, and the toughness decreases. Therefore, the welding rate is preferably 70 mm/min or more. On the other hand, if the welding rate is more than 300 mm/min, the welding rate is excessively high, and Mn-enriched inclusion is excessively formed. Therefore, the welding rate is preferably 300 mm/min or less.

In addition, the welding is preferably performed at a low degree of vacuum, specifically, at 10 Pa or less. Although the lower limit of the degree of vacuum depends on the capacity of the facility, the lower limit is on the order of $10^{-2}$ Pa in many cases. In order to meet the requirements of the inclusion described above and the requirements of the bead width described above, the average cooling rate of the welded metal is preferably in a range of 10 to 40°C/second in a temperature range of the surface temperature of the welded metal of 800 to 500°C. If the average cooling rate is less than 10°C/second, the desired inclusion cannot be obtained, the bead width widens, and the toughness decreases. Note that although the lower limit of the cooling rate of the welded metal in the temperature range described above is not particularly limited, the cooling rate may be 10°C/second, for example.

Furthermore, in the electron beam welding, the insert metal can be appropriately used as required. When the insert metal is used, welding can be performed with the insert metal disposed between the bevel surfaces of the parts to be welded. As the insert metal, for example, a Ni-base alloy foil, a Ni-Fe alloy foil, an industrial pure Ni foil or the like can be used. By using such an insert metal containing Ni, the content of Ni in the welded metal can be increased compared with the base metal. To make the content of Ni in the welded metal fall within a desired range, the amount of the insert metal used can be appropriately adjusted.

In this way, the welded structure can be fabricated using the obtained welded joint. Note that when the welded joint according to this embodiment and the welded structure can be manufactured by laser welding, the welded joint and the welded structure may be manufactured by laser welding.

In the following, the present disclosure will be described in more detail with reference to examples. However, the present disclosure is not limited to these examples.

EXAMPLES

Steel materials (steel plates) having the chemical compositions described in Tables 1 and 2, which are the material of welded joints, were fabricated under the conditions described in Tables 1 and 2. Specifically, a steel was melted in a converter, and a cast piece having a thickness of 300 mm was manufactured by continuous casting. The resulting cast piece was hot-rolled under the conditions described in Tables 1 and 2, and then various heat treatments described in Tables 1 and 2 were performed to produce a steel plate. Note that "ACC" in Tables 1 and 2 indicates that controlled cooling was performed for water-cooling the steel plate after the hot rolling. "QT" indicates that the steel plate was allowed to cool after the hot rolling, then was subjected to reheating and hardening, and then was tempered for 20 minutes. Here, QT includes DQT in which water cooling (direct hardening) and tempering occur after hot rolling, and the effects of the welded joint according to this embodiment can be similarly achieved even if steel materials manufactured by DQT are welded. The temperatures described in Tables 1 and 2 are temperatures of the surface of the steel material measured with a radiation thermometer, and the tempering temperatures are soaking temperatures in the furnace when the tempering treatment was performed. Tables 1 and 2 are as follows. Note that in the following description, the symbol "-" in the tables indicates the element is contained at the level of impurities.

[Table 1]

Table 1

| Steel No. | Chemical composition of steel plates (mass%, balance: Fe and impurities) | | | | | | | | | | | | | | | | | | Manufacturing conditions of steel materials | | | | | | |
|---|---|---|---|---|---|---|---|---|---|---|---|---|---|---|---|---|---|---|---|---|---|---|---|---|---|
| | C | Si | Mn | P | S | Ti | N | O | Al | Nb | V | Cr | Mo | Cu | Ni | B | Sn | W | Heating temperature (°C) | Heat treatment | Final rolling temperature (°C) | Water cooling start temperature (°C) | Water cooling end temperature (°C) | Tempering temperature (°C) | Plate thickness (mm) |
| 1 | 0.050 | 0.28 | 1.95 | 0.014 | 0.0028 | 0.012 | 0.0055 | 0.0020 | 0.001 | 0.008 | - | 0.30 | - | 0.20 | 0.50 | - | - | - | 1000 | ACC | 855 | 821 | 317 | - | 50 |
| 2 | 0.050 | 0.36 | 2.38 | 0.011 | 0.0027 | 0.013 | 0.0051 | 0.0011 | 0.002 | - | 0.042 | 0.47 | - | - | - | 0.0011 | - | - | 1000 | ACC | 834 | 844 | 354 | - | 80 |
| 3 | 0.050 | 0.39 | 2.21 | 0.010 | 0.0025 | 0.009 | 0.0033 | 0.0025 | 0.003 | - | 0.029 | 0.30 | 0.25 | 0.21 | 0.25 | - | - | - | 1050 | QT | 943 | - | - | 410 | 120 |
| 4 | 0.050 | 0.43 | 2.24 | 0.009 | 0.0028 | 0.012 | 0.0058 | 0.0020 | 0.003 | - | 0.025 | 0.23 | - | 0.20 | - | - | - | - | 1080 | ACC | 845 | 824 | 393 | - | 80 |
| 5 | 0.060 | 0.21 | 1.77 | 0.012 | 0.0031 | 0.007 | 0.0061 | 0.0028 | 0.003 | 0.013 | - | 0.22 | 0.21 | 0.13 | 0.31 | 0.0007 | - | - | 1050 | ACC | 841 | 810 | 353 | - | 70 |
| 6 | 0.060 | 0.29 | 2.40 | 0.010 | 0.0024 | 0.009 | 0.0038 | 0.0028 | 0.002 | - | 0.030 | - | - | - | 0.20 | 0.0015 | - | - | 1080 | ACC | 814 | 812 | 390 | - | 80 |
| 7 | 0.060 | 0.33 | 1.74 | 0.007 | 0.0029 | 0.007 | 0.0061 | 0.0022 | 0.002 | - | - | - | 0.31 | 0.10 | 0.39 | 0.0013 | - | - | 1000 | ACC | 824 | 813 | 312 | - | 70 |
| 8 | 0.070 | 0.23 | 2.34 | 0.004 | 0.0018 | 0.011 | 0.0064 | 0.0028 | 0.003 | - | - | - | 0.17 | - | - | - | - | - | 1100 | ACC | 819 | 839 | 301 | - | 70 |
| 9 | 0.070 | 0.29 | 2.75 | 0.003 | 0.0013 | 0.008 | 0.0062 | 0.0015 | 0.003 | - | - | - | 0.14 | - | - | - | - | 0.43 | 1100 | ACC | 826 | 825 | 361 | - | 100 |
| 10 | 0.070 | 0.30 | 2.20 | 0.008 | 0.0023 | 0.008 | 0.0055 | 0.0019 | 0.002 | - | 0.021 | - | - | - | - | - | 0.21 | - | 1000 | ACC | 826 | 839 | 332 | - | 60 |
| 11 | 0.070 | 0.33 | 2.14 | 0.014 | 0.0024 | 0.013 | 0.0055 | 0.0010 | 0.003 | 0.004 | 0.014 | 0.17 | 0.45 | 0.16 | - | - | - | - | 1050 | QT | 953 | - | - | 370 | 120 |
| 12 | 0.070 | 0.38 | 2.56 | 0.011 | 0.0024 | 0.013 | 0.0058 | 0.0026 | 0.002 | 0.006 | 0.027 | 0.18 | - | 0.11 | - | 0.0011 | - | - | 1050 | ACC | 834 | 819 | 347 | - | 100 |
| 13 | 0.070 | 0.44 | 2.43 | 0.009 | 0.0023 | 0.005 | 0.0040 | 0.0011 | 0.003 | - | - | - | - | - | - | - | - | - | 1050 | ACC | 817 | 838 | 366 | - | 70 |
| 14 | 0.080 | 0.27 | 2.33 | 0.012 | 0.0025 | 0.012 | 0.0052 | 0.0013 | 0.002 | - | 0.031 | - | - | 0.14 | - | - | - | 0.24 | 1000 | ACC | 846 | 849 | 357 | - | 50 |
| 15 | 0.090 | 0.24 | 2.00 | 0.006 | 0.0013 | 0.007 | 0.0039 | 0.0035 | 0.003 | - | 0.022 | - | 0.32 | - | - | 0.0007 | 0.23 | - | 1050 | ACC | 816 | 804 | 345 | - | 80 |
| 16 | 0.090 | 0.36 | 2.14 | 0.005 | 0.0025 | 0.010 | 0.0043 | 0.0042 | 0.002 | - | - | - | - | - | - | - | - | - | 1000 | ACC | 832 | 832 | 320 | - | 70 |

[Table 2]

Table 2

| Steel No. | Chemical composition of steel plates (mass%, balance: Fe and impurities) | | | | | | | | | | | | | | | | | | Manufacturing conditions of steel materials | | | | | | |
|---|---|---|---|---|---|---|---|---|---|---|---|---|---|---|---|---|---|---|---|---|---|---|---|---|---|
| | C | Si | Mn | P | S | Ti | N | O | Al | Nb | V | Cr | Mo | Cu | Ni | B | Sn | W | Heating temperature (°C) | Heat treatment | Final rolling temperature (°C) | Water cooling start temperature (°C) | Water cooling end temperature (°C) | Tempering temperature (°C) | Plate thickness (mm) |
| 17 | 0.110 | 0.33 | 1.80 | 0.014 | 0.0024 | 0.004 | 0.0026 | 0.0024 | 0.003 | 0.006 | - | 0.14 | 0.42 | - | - | - | - | - | 1050 | QT | 955 | - | - | 370 | 120 |
| 18 | 0.080 | 0.05 | 2.39 | 0.004 | 0.0027 | 0.013 | 0.0042 | 0.0010 | 0.003 | - | - | - | - | - | - | - | - | - | 1100 | ACC | 819 | 839 | 301 | - | 50 |
| 19 | 0.060 | 0.52 | 2.44 | 0.007 | 0.0032 | 0.006 | 0.0051 | 0.0027 | 0.002 | - | 0.028 | - | 0.14 | - | - | - | - | - | 1000 | ACC | 845 | 817 | 344 | - | 100 |
| 20 | 0.060 | 0.45 | 2.86 | 0.013 | 0.0025 | 0.013 | 0.0059 | 0.0012 | 0.001 | 0.014 | - | - | - | - | - | - | - | - | 1008 | ACC | 832 | 832 | 320 | - | 60 |
| 21 | 0.070 | 0.42 | 2.31 | 0.016 | 0.0032 | 0.014 | 0.0059 | 0.0013 | 0.004 | - | 0.034 | 0.07 | - | 0.16 | - | - | - | - | 1050 | ACC | 851 | 849 | 369 | - | 100 |
| 22 | 0.050 | 0.33 | 2.37 | 0.004 | 0.0008 | 0.009 | 0.0051 | 0.0025 | 0.004 | - | - | 0.20 | 0.13 | - | 0.10 | 0.0016 | - | - | 1050 | QT | 953 | - | - | 580 | 120 |
| 23 | 0.080 | 0.32 | 2.12 | 0.003 | 0.0043 | 0.007 | 0.0060 | 0.0021 | 0.001 | 0.008 | - | 0.21 | 0.20 | - | - | - | - | - | 1050 | ACC | 816 | 804 | 345 | - | 60 |
| 24 | 0.050 | 0.28 | 2.17 | 0.009 | 0.0029 | 0.001 | 0.0028 | 0.0019 | 0.001 | - | - | 0.17 | 0.25 | - | - | - | - | - | 1050 | ACC | 855 | 801 | 391 | - | 60 |
| 25 | 0.060 | 0.23 | 2.13 | 0.005 | 0.0026 | 0.017 | 0.0022 | 0.0016 | 0.001 | 0.007 | - | 0.34 | 0.34 | - | - | - | - | - | 1050 | QT | 947 | - | - | 450 | 100 |
| 26 | 0.070 | 0.31 | 2.52 | 0.004 | 0.0023 | 0.014 | 0.0005 | 0.0012 | 0.004 | - | - | - | - | - | - | - | - | - | 1100 | QT | 1004 | - | - | 400 | 100 |
| 27 | 0.070 | 0.30 | 2.25 | 0.009 | 0.0030 | 0.011 | 0.0064 | 0.0021 | 0.001 | 0.011 | - | - | 0.15 | - | 0.45 | - | - | - | 1000 | ACC | 845 | 817 | 344 | - | 80 |
| 28 | 0.080 | 0.41 | 2.64 | 0.010 | 0.0024 | 0.005 | 0.0061 | 0.0003 | 0.003 | - | - | - | 0.08 | - | - | 0.0018 | - | - | 1000 | ACC | 819 | 832 | 360 | - | 100 |
| 29 | 0.090 | 0.25 | 2.11 | 0.012 | 0.0021 | 0.004 | 0.0026 | 0.0048 | 0.001 | 0.005 | - | - | - | - | 0.13 | 0.0007 | - | - | 1000 | ACC | 834 | 844 | 354 | - | 70 |
| 30 | 0.080 | 0.32 | 1.65 | 0.012 | 0.0022 | 0.011 | 0.0055 | 0.0021 | 0.004 | 0.008 | - | - | 0.07 | - | - | - | - | - | 1086 | ACC | 845 | 824 | 393 | - | 70 |
| 31 | 0.070 | 0.29 | 2.60 | 0.003 | 0.0023 | 0.008 | 0.0062 | 0.0015 | 0.002 | - | - | 0.20 | 0.14 | - | 0.40 | - | - | - | 1100 | ACC | 826 | 825 | 361 | - | 100 |
| 32 | 0.070 | 0.30 | 2.16 | 0.008 | 0.0023 | 0.008 | 0.0054 | 0.0019 | 0.002 | - | 0.021 | - | - | - | - | - | - | - | 1000 | ACC | 826 | 839 | 332 | - | 60 |
| 33 | 0.050 | 0.36 | 2.51 | 0.011 | 0.0027 | 0.013 | 0.0052 | 0.0011 | 0.002 | - | 0.042 | 0.47 | - | - | - | 0.0011 | - | - | 1000 | ACC | 834 | 844 | 354 | - | 80 |
| 34 | 0.080 | 0.31 | 2.28 | 0.009 | 0.0022 | 0.012 | 0.0023 | 0.0012 | 0.042 | 0.007 | - | - | - | - | 0.17 | - | - | - | 1000 | ACC | 841 | 822 | 332 | - | 60 |

For the obtained steel plates, a tensile test was performed to check the mechanical property as the base metal.

15

Specifically, the tensile test was in conformity with JIS Z 2241: 2011, two test specimens were taken from the steel plate at the position of 1/4 of the plate thickness, and TS (tensile strength) and YS (0.2% yield stress) were determined as average values of the two test specimens, respectively. Note that in this test, bar-shaped test specimens (14A) were used.

Using two of the obtained steel plates of the same type, in the state where the two steel plates are slightly spaced apart from each other, a single pass piercing welding was applied, and the steel plates were butt-welded by electron beam welding to fabricate a welded joint. Note that in the electron beam welding, the high energy density beam was an electron energy beam. The atmosphere used for the welding was a vacuum atmosphere after argon replacement, and the pressure as 4 Pa or less. The welding conditions were as shown in Tables 3 and 4. Note that in the inventive examples of the present invention, the average cooling rate was adjusted to be 15 to 40°C/second while the temperature of the welded metal passed through the temperature range of 800 to 500°C.

[Table 3]

Table 3

| Test No. | Steel No. | Manufacturing conditions | | |
|---|---|---|---|---|
| | | Acceleration voltage (kV) | Beam current (mA) | Welding rate (mm/min) |
| 1 | 1 | 150 | 142 | 150 |
| 2 | 2 | 175 | 165 | 110 |
| 3 | 3 | 175 | 194 | 80 |
| 4 | 4 | 175 | 165 | 110 |
| 5 | 5 | 150 | 193 | 130 |
| 6 | 6 | 175 | 165 | 110 |
| 7 | 7 | 150 | 193 | 130 |
| 8 | 8 | 150 | 193 | 130 |
| 9 | 9 | 175 | 196 | 100 |
| 10 | 10 | 150 | 158 | 130 |
| 11 | 11 | 175 | 194 | 80 |
| 12 | 12 | 175 | 196 | 100 |
| 13 | 13 | 150 | 193 | 130 |
| 14 | 14 | 150 | 142 | 150 |
| 15 | 15 | 175 | 165 | 110 |
| 16 | 16 | 150 | 193 | 130 |

[Table 4]

Table 4

| Test No. | Steel No. | Manufacturing conditions | | |
|---|---|---|---|---|
| | | Acceleration voltage (kV) | Beam current (mA) | Welding rate (mm/min) |
| 17 | 17 | 175 | 194 | 80 |
| 18 | 18 | 150 | 142 | 150 |
| 19 | 19 | 175 | 196 | 100 |
| 20 | 20 | 150 | 158 | 130 |
| 21 | 21 | 175 | 196 | 100 |

(continued)

| Test No. | Steel No. | Manufacturing conditions | | |
|---|---|---|---|---|
| | | Acceleration voltage (kV) | Beam current (mA) | Welding rate (mm/min) |
| 22 | 22 | 175 | 194 | 80 |
| 23 | 23 | 150 | 158 | 130 |
| 24 | 24 | 150 | 158 | 130 |
| 25 | 25 | 175 | 196 | 100 |
| 26 | 26 | 175 | 196 | 100 |
| 27 | 27 | 175 | 165 | 110 |
| 28 | 28 | 175 | 196 | 100 |
| 29 | 29 | 150 | 193 | 130 |
| 30 | 30 | 150 | 193 | 130 |
| 31 | 31 | 175 | 196 | 100 |
| 32 | 32 | 150 | <u>130</u> | 90 |
| 33 | 33 | 175 | <u>130</u> | 70 |
| 34 | 34 | 150 | 158 | 130 |
| Underline indicates that the value fell out of the preferable producing condition. | | | | |

In addition, chemical analysis was performed on specimens taken from the welded metals of the obtained welded joints. Tables 5 and 6 show the chemical compositions of the welded metals. Note that the insert metal was not used for the welding, and therefore, except for Mn, O and N, the chemical compositions of the base metals (chemical compositions of the steel plates) were substantially the same as the chemical compositions of the welded metals.

In addition, the ferrite micro-structure of the welded metal was observed by image analysis using EBSD. Specifically, FE-SEM and EBSD associated therewith were used. Here, provided that the thickness of the base metal in a plane perpendicular to a welding progression direction was denoted by t, five images of a cross-section micro-structure of the welded metal were captured with a field of view of 250 $\mu$m $\times$ 200 $\mu$m with the center of the field of view located at 1/2t. From the obtained data, using image analysis software, a range defined by 15° high angle grain boundaries was defined as an effective crystal grain, and the average crystal grain size was calculated by arithmetic averaging of equivalent circle diameters calculated from the area of effective crystal grains. The image analysis software was Image J, which is general-purpose software. Note that as a result of calculation of the area fraction of ferrite, it was found that the metal micro-structure of the welded metal was a micro-structure containing 85% or more of ferrite in all the inventive examples of the present invention.

Furthermore, inclusions in the welded metal were observed by image analysis using an electron microscope. Specifically, a backscattered electron image of the cross section (the cross section in which the average crystal grain size of the welded metal was measured) of the welded metal was captured with FE-SEM, and inclusions were extracted based on the contrast of the obtained image. The equivalent circle diameter and number density of the inclusions were measured. Note that in this process, the observation magnification of SEM was 1000, and 25 fields of view were measured. In addition, the electron beam diameter was 0.1 $\mu$m.

In order to examine the state of each inclusion, EDS attached to FE-SEM was used. For each inclusion, the content of Mn was measured at ten points per grain on the periphery of the grain, at which Mn was likely to precipitate, by point analysis, and if the content of Mn measured at at least one of the ten measurement points of an inclusion was higher than the content of Mn in the base metal, the inclusion was determined to be the Mn-enriched inclusion. From the number of the inclusions determined to be the Mn-enriched inclusion and the observation conditions, the number density of the Mn-enriched inclusion was calculated. In addition, the equivalent circle diameter of the Mn-enriched inclusion was also calculated. Note that in all the examples, the Mn-enriched inclusions were 0.1 to 1.0 $\mu$m in size.

For the obtained welded joints, the bead width at a predetermined position was measured. In addition, the Charpy impact test was performed by taking a test specimen from the base metal at the position of 1/4 of the thickness (plate thickness) thereof with the welded metal located at the center in the test specimen. In the Charpy impact test, a V-notched test specimen was used by forming a V-shaped notch in the center of a surface of the obtained test specimen that was perpendicular to the welding progression direction, that is, the welded metal. The size of the test specimen was 10 $\times$ 10 $\times$

550 mm, that is, the test specimen was a full-sized test specimen. Using this V-notched test specimen, the Charpy impact test was performed at -40°C according to JIS Z 2242: 2018. The test was performed on three test specimens, and an average value (arithmetic average) of the absorbed energy was calculated as the impact absorbed energy. The toughness was determined to be excellent when the impact absorbed energy was 70 J or more. Tables 5 and 6 below show the results.

[Table 5]

Table 5

| Test No. | Steel No. | Welded metal | | | | | | | | | | | | | | | | | | | | | Base metal properties | | Welded metal property |
| | | Chemical composition (mass%, balance: Fe and impurities) | | | | | | | | | | | | | | | | | CeEBW | Average crystal grain size (μm) | Mn-enriched inclusion | | Bead width (mm) | Tensile strength (MPa) | Yield stress (MPa) | Impact absorbed energy vE-40(J) |
| | | C | Si | Mn | P | S | Ti | N | O | Al | Nb | V | Cr | Mo | Cu | Ni | B | Sn | W | | | Presence or absence | Number density (/mm²) | | | | |
| 1 | 1 | 0.050 | 0.28 | 1.72 | 0.014 | 0.0028 | 0.012 | 0.0051 | 0.0014 | 0.001 | 0.008 | - | 0.30 | - | 0.20 | 0.50 | - | - | - | 0.59 | 75.1 | Presence | 1321 | 4.8 | 457 | 400 | 195 |
| 2 | 2 | 0.047 | 0.36 | 2.21 | 0.011 | 0.0027 | 0.013 | 0.0048 | 0.0007 | 0.002 | - | 0.042 | 0.47 | - | - | - | 0.0011 | - | - | 0.70 | 58.9 | Presence | 922 | 4.5 | 446 | 369 | 97 |
| 3 | 3 | 0.052 | 0.39 | 2.10 | 0.010 | 0.0025 | 0.009 | 0.0030 | 0.0015 | 0.003 | - | 0.029 | 0.30 | 0.25 | 0.21 | 0.25 | - | - | - | 0.72 | 108.2 | Presence | 940 | 4.5 | 413 | 385 | 141 |
| 4 | 4 | 0.050 | 0.43 | 1.97 | 0.009 | 0.0028 | 0.012 | 0.0054 | 0.0012 | 0.003 | - | 0.025 | 0.23 | - | 0.20 | - | - | - | - | 0.61 | 69.0 | Presence | 846 | 4.7 | 487 | 391 | 129 |
| 5 | 5 | 0.060 | 0.21 | 1.56 | 0.012 | 0.0031 | 0.007 | 0.0057 | 0.0017 | 0.003 | 0.013 | - | 0.22 | 0.21 | 0.13 | 0.31 | 0.0007 | - | - | 0.57 | 50.3 | Presence | 1833 | 4.6 | 445 | 385 | 265 |
| 6 | 6 | 0.060 | 0.29 | 2.23 | 0.010 | 0.0024 | 0.009 | 0.0035 | 0.0011 | 0.002 | - | 0.030 | - | - | - | 0.20 | 0.0015 | - | - | 0.64 | 70.6 | Presence | 791 | 4.5 | 476 | 390 | 119 |
| 7 | 7 | 0.061 | 0.33 | 1.65 | 0.007 | 0.0029 | 0.007 | 0.0058 | 0.0015 | 0.002 | - | - | - | 0.31 | 0.10 | 0.39 | 0.0013 | - | - | 0.57 | 87.7 | Presence | 1457 | 4.8 | 446 | 388 | 251 |
| 8 | 8 | 0.070 | 0.23 | 2.06 | 0.004 | 0.0018 | 0.011 | 0.0059 | 0.0017 | 0.003 | - | - | - | 0.17 | - | - | - | - | - | 0.62 | 50.8 | Presence | 412 | 4.7 | 449 | 403 | 74 |
| 9 | 9 | 0.072 | 0.29 | 2.42 | 0.003 | 0.0013 | 0.008 | 0.0058 | 0.0009 | 0.003 | - | - | - | 0.14 | - | - | - | - | 0.43 | 0.71 | 64.8 | Presence | 367 | 4.6 | 480 | 405 | 94 |
| 10 | 10 | 0.073 | 0.30 | 2.05 | 0.008 | 0.0023 | 0.008 | 0.0051 | 0.0008 | 0.002 | - | 0.021 | - | - | - | - | - | 0.21 | - | 0.59 | 127.6 | Presence | 1034 | 4.5 | 455 | 402 | 97 |
| 11 | 11 | 0.070 | 0.33 | 1.99 | 0.014 | 0.0024 | 0.013 | 0.0051 | 0.0006 | 0.003 | 0.004 | 0.014 | 0.17 | 0.45 | 0.16 | - | - | - | - | 0.70 | 69.4 | Presence | 235 | 4.8 | 429 | 385 | 112 |
| 12 | 12 | 0.068 | 0.38 | 2.43 | 0.011 | 0.0024 | 0.013 | 0.0055 | 0.0016 | 0.002 | 0.006 | 0.027 | 0.18 | - | 0.11 | - | 0.0011 | - | - | 0.72 | 54.8 | Presence | 691 | 4.7 | 489 | 414 | 123 |
| 13 | 13 | 0.070 | 0.44 | 2.14 | 0.009 | 0.0023 | 0.005 | 0.0037 | 0.0007 | 0.003 | - | - | - | - | - | - | - | - | - | 0.61 | 117.5 | Presence | 1671 | 4.5 | 456 | 374 | 264 |
| 14 | 14 | 0.079 | 0.27 | 2.05 | 0.012 | 0.0025 | 0.012 | 0.0048 | 0.0008 | 0.002 | - | 0.031 | - | - | 0.14 | - | - | - | 0.24 | 0.61 | 77.0 | Presence | 846 | 4.6 | 475 | 406 | 208 |
| 15 | 15 | 0.091 | 0.24 | 1.86 | 0.006 | 0.0013 | 0.007 | 0.0037 | 0.0014 | 0.003 | - | 0.022 | - | 0.32 | - | - | 0.0007 | 0.23 | - | 0.62 | 108.4 | Presence | 1104 | 4.6 | 485 | 391 | 154 |
| 16 | 16 | 0.092 | 0.36 | 1.88 | 0.005 | 0.0025 | 0.010 | 0.0040 | 0.0029 | 0.002 | - | - | - | - | - | - | - | - | - | 0.56 | 74.4 | Presence | 1321 | 4.7 | 451 | 402 | 310 |

Bead width above indicates that bead width at the position of 1/2 of the penetration depth d of the welded metal in the plane perpendicular to the welding progression direction.

Inventive example

[Table 6]

[Table 6]

Table 6

| Test No. | Steel No. | Welded metal | | | | | | | | | | | | | | | | | | | | | | | Base metal properties | | Welded metal property |
| | | Chemical composition (mass%, balance: Fe and impurities) | | | | | | | | | | | | | | | | | CeEBW | Average crystal grain size (μm) | Mn-enriched inclusion | | Bead width (mm) | Tensile strength (MPa) | Yield stress (MPa) | Impact absorbed energy vE-40(J) |
| | | C | Si | Mn | P | S | Ti | N | O | Al | Nb | V | Cr | Mo | Cu | Ni | B | Sn | W | | | Presence or absence | Number density (/mm²) | | | | |
|---|---|---|---|---|---|---|---|---|---|---|---|---|---|---|---|---|---|---|---|---|---|---|---|---|---|---|---|
| 17 | 17 | 0.111 * | 0.33 | 1.62 | 0.014 | 0.0024 | 0.004 | 0.0024 | 0.0017 | 0.003 | 0.006 | - | 0.14 | 0.42 | - | - | - | - | - | 0.63 | 60.0 | Presence | 846 | 4.8 | 512 | 435 | <u>26</u> |
| 18 | 18 | 0.082 | 0.05 * | 2.03 | 0.004 | 0.0027 | 0.013 | 0.0040 | 0.0006 | 0.003 | - | - | - | - | - | - | - | - | - | 0.59 | 223.0 * | Presence | 11 * | 4.7 | 413 | 348 | <u>37</u> |
| 19 | 19 | 0.060 | 0.52 * | 2.32 | 0.007 | 0.0032 | 0.006 | 0.0047 | 0.0016 | 0.002 | - | 0.028 | - | 0.14 | - | - | - | - | - | 0.67 | 63.1 | Presence | 1739 | 4.6 | 492 | 403 | <u>43</u> |
| 20 | 20 | 0.059 | 0.45 | 2.52 * | 0.013 | 0.0025 | 0.013 | 0.0055 | 0.0005 | 0.001 | 0.014 | - | - | - | - | - | - | - | - | 0.69 | 64.1 | Presence | 1363 | 4.7 | 511 | 437 | <u>24</u> |
| 21 | 21 | 0.071 | 0.42 | 2.03 | 0.016 * | 0.0032 | 0.014 | 0.0055 | 0.0009 | 0.004 | - | 0.034 | 0.07 | - | 0.16 | - | - | - | - | 0.61 | 123.9 | Presence | 423 | 4.5 | 457 | 375 | <u>19</u> |
| 22 | 22 | 0.052 | 0.33 | 2.20 | 0.004 | 0.0008 * | 0.009 | 0.0048 | 0.0015 | 0.004 | - | - | 0.20 | 0.13 | - | 0.10 | 0.0016 | - | - | 0.67 | 245.0 * | Presence | 16 * | 4.8 | 458 | 398 | <u>41</u> |
| 23 | 23 | 0.080 | 0.32 | 2.01 | 0.003 | 0.0043 * | 0.007 | 0.0055 | 0.0013 | 0.001 | 0.008 | - | 0.21 | 0.20 | - | - | - | - | - | 0.66 | 84.5 | Presence | 2988 * | 4.6 | 485 | 391 | <u>23</u> |
| 24 | 24 | 0.053 | 0.28 | 1.91 | 0.009 | 0.0029 | 0.001 * | 0.0026 | 0.0011 | 0.001 | - | - | 0.17 | 0.25 | - | - | - | - | - | 0.61 | 263.0 * | Presence | 6 * | 4.7 | 472 | 384 | <u>31</u> |
| 25 | 25 | 0.064 | 0.23 | 1.87 | 0.005 | 0.0026 | 0.017 * | 0.0020 | 0.0010 | 0.001 | 0.007 | - | 0.34 | 0.34 | - | - | - | - | - | 0.67 | 110.0 | Presence | 1504 | 4.8 | 446 | 388 | <u>15</u> |
| 26 | 26 | 0.070 | 0.31 | 2.34 | 0.004 | 0.0023 | 0.014 | 0.0005 * | 0.0005 | 0.004 | - | - | - | - | - | - | - | - | - | 0.66 | 295.0 * | Presence | 398 | 4.7 | 455 | 403 | <u>51</u> |
| 27 | 27 | 0.072 | 0.30 | 2.14 | 0.009 | 0.0030 | 0.011 | 0.0061 * | 0.0015 | 0.001 | 0.011 | - | - | 0.15 | - | 0.45 | - | - | - | 0.67 | 81.1 | Presence | 1671 | 4.7 | 492 | 403 | <u>33</u> |
| 28 | 28 | 0.080 | 0.41 | 2.32 | 0.010 | 0.0024 | 0.005 | 0.0056 | 0.0002 * | 0.003 | - | - | - | 0.08 | - | - | 0.0018 | - | - | 0.68 | 189.0 * | Presence | 22 * | 4.7 | 436 | 385 | <u>12</u> |
| 29 | 29 | 0.089 | 0.25 | 1.86 | 0.012 | 0.0021 | 0.004 | 0.0024 | 0.0032 * | 0.001 | 0.005 | - | - | - | - | 0.13 | 0.0007 | - | - | 0.56 | 47.0 | Presence | 2812 * | 4.6 | 446 | 369 | <u>31</u> |
| 30 | 30 | 0.078 | 0.32 | 1.53 | 0.012 | 0.0022 | 0.011 | 0.0051 | 0.0008 | 0.004 | 0.008 | - | - | 0.07 | - | - | - | - | - | 0.47 * | 199.0 * | Presence | 1211 | 4.5 | 423 | 363 | <u>38</u> |
| 31 | 31 | 0.072 | 0.29 | 2.42 | 0.003 | 0.0023 | 0.008 | 0.0058 | 0.0009 | 0.002 | - | - | 0.20 | 0.14 | - | 0.40 | - | - | - | 0.77 * | 183.0 * | Presence | 367 | 4.8 | 480 | 405 | <u>41</u> |
| 32 | 32 | 0.070 | 0.30 | 2.05 | 0.008 | 0.0023 | 0.008 | 0.0051 | 0.0011 | 0.002 | - | 0.021 | - | - | - | - | - | - | - | 0.59 | 198.9 * | Presence | 22 * | 7.3 * | 455 | 402 | <u>29</u> |
| 33 | 33 | 0.051 | 0.36 | 2.21 | 0.011 | 0.0027 | 0.013 | 0.0048 | 0.0007 | 0.002 | - | 0.042 | 0.47 | - | - | - | 0.0011 | - | - | 0.71 | 172.3 * | Presence | 13 * | 6.2 | 446 | 369 | <u>44</u> |
| 34 | 34 | 0.078 | 0.31 | 2.12 | 0.009 | 0.0022 | 0.012 | 0.0022 | 0.0005 | 0.042 * | 0.007 | - | - | - | - | 0.17 | - | - | - | 0.62 | 277.0 * | Absence | 0 * | 5.6 | 442 | 361 | <u>25</u> |

* indicates that the value fell out of the requirements of this embodiment.

The underline indicates that an underlined value is out of its targeted property.

Bead width above indicates that bead width at the position of 1/2 of the penetration depth d of the welded metal in the plane perpendicular to the welding progression direction.

As shown in Table 5, in tests No. 1 to 16 that meet the requirements of this embodiment, the welded metal had an excellent toughness of 70 J or more at -40°C. In addition, the base metal had a yield stress (YS) of 355 to 420 MPa and a tensile strength (TS) of 400 to 550 MPa, which were excellent properties.

On the other hand, as shown in Table 6, in tests No. 17 to 35 in which at least one of the chemical composition, CeEBW, the number density of the inclusion and the bead width of the welded metal does not meet the requirements of this embodiment, the toughness of the welded part decreased.

In the test No. 17, the content of C was high, so that the hardenability increased, and as a result, the toughness of the welded metal decreased. In the test No. 18, the content of Si was low, so that the Mn-enriched inclusion was not sufficiently formed, the average crystal grain size increased, and the toughness of the welded metal decreased. In the test No. 19, the content of Si was high, and martensite islands were generated, so that the toughness of the welded metal decreased. In the test No. 20, the content of Mn was high, so that the toughness of the welded metal decreased. In the test No. 21, the content of P was high, so that the toughness of the welded metal decreased.

In the test No. 22, the content of S was low, so that the Mn-enriched inclusion was not sufficiently formed, and the number density decreased. As a result, the average crystal grain size increased, and the toughness decreased. In the test No. 23, the content of S was high, so that the number density of the Mn-enriched inclusion increased. As a result, fracture occurred at the Mn-enriched inclusion itself, and the toughness decreased.

In the test No. 24, the content of Ti was low, so that the Mn-enriched inclusion was not sufficiently formed, and the number density decreased. As a result, the average crystal grain size increased, and the toughness decreased. In the test No. 25, the content of Ti was high, and coarse TiN was generated, so that the toughness of the welded metal decreased. In the test No. 26, the content of N was low, and a sufficient amount of TiN for suppressing coarsening of crystal grains was not able to be formed, so that the toughness of the welded metal decreased. In the test No. 27, the content of N was high, and TiN was excessively formed, so that the toughness of the welded metal decreased. In the test No. 28, the content of O was low, and the Mn-enriched inclusion was not sufficiently formed, and the number density decreased. As a result, the average crystal grain size increased, and the toughness decreased.

In the test No. 29, the content of O was high, oxides were excessively formed, and as a result, the number density of the Mn-enriched inclusion increased. As a result, the toughness decreased. In the test No. 30, CeEBW was low, and the transformation temperature was high, so that generation and grain growth of ferrite from the austenite grain boundary was dominant, the welded metal was formed by coarse grains, and the toughness decreased. In the test No. 31, CeEBW was high, and the transformation temperature was low, so that generation of intragranular ferrite was dominant, although the grain growth proceeded, the welded metal was formed by coarse grains, and the toughness decreased.

In the test No. 32, the beam current was low, and the welding conditions did not meet the preferred conditions according to this embodiment. Therefore, the bead width increased, the Mn-enriched inclusion was not sufficiently formed, and the average crystal grain size of the welded metal increased. As a result, the toughness of the welded metal decreased.

In the test No. 33, as in the test No. 32, the beam current was low, and the welding conditions did not meet the preferred conditions according to this embodiment. In the test No. 33, although the bead width did not increase, the Mn-enriched inclusion was not sufficiently formed, the crystal grains of the welded metal grew, and the average crystal grain size increased. As a result, the toughness of the welded metal decreased.

In the test No. 34, the content of Al was high, and the Mn-enriched inclusion was no formed, so that the toughness of the welded metal decreased.

INDUSTRIAL APPLICABILITY

The welded joint according to this embodiment is a joint welded by electron beam welding and has excellent toughness and excellent manufacturability. Therefore, the welded joint is suitable for welded structures, such as wind power generation towers, bridges, ships, offshore structures, pressure vessels, and line pipes.

REFERENCE SIGNS LIST

1 base metal for joint
2 insert metal
3 base metal
4 welded metal
5 bead width at position of 1/2 of penetration depth d of welded metal in plane perpendicular to welding progression direction

**Claims**

1. A welded joint, comprising:

a welded metal; and
a base metal,
wherein a chemical composition of the welded metal consists of, in % by mass,
C: 0.045 to 0.100%,
Si: 0.15 to 0.50%,
Mn: 1.50 to 2.50%,
P: 0.015% or less,
S: 0.0010 to 0.0035%,
Ti: 0.003 to 0.015%,
N: 0.0010 to 0.0060%,
O: 0.0005 to 0.0030%,
Al: 0 to 0.004%,
Nb: 0 to 0.020%,
V: 0 to 0.050%,
Cr: 0 to 0.50%,
Mo: 0 to 0.50%,
Cu: 0 to 1.00%,
Ni: 0 to 1.00%,
B: 0 to 0.0020%,
Sn: 0 to 0.25%,
W: 0 to 0.50%, and
the balance: Fe and an impurity,
CeEBW calculated according to a following formula (i) is 0.56 to 0.73,
an average crystal grain size of the metal micro-structure is 30.0 to 150.0 $\mu$m,
the welded metal contains an Mn-enriched inclusion, which is an inclusion having a content of Mn higher than a content of Mn in the base metal,
a size of the Mn-enriched inclusion is 0.1 to 1.0 $\mu$m in equivalent circle diameter, and a number density of the Mn-enriched inclusion is 30 to 2000 /mm$^2$,
a bead width is 7.0 mm or less at a position of 1/2 of a penetration depth d of the welded metal in a plane perpendicular to a welding progression direction, and

$$CeEBW = C+1/4Mn+1/15Cu+1/15Ni+1/5Cr+1/5Mo+1/5V \ldots (i)$$

where each symbol of element denotes a content, in % by mass, of the element contained in the welded metal and assumes 0 if the element is not contained.

2. The welded joint according to claim 1, wherein a thickness of the base metal is 45 to 150 mm.

3. The welded structure, comprising the welded joint according to claim 1 or 2.

FIGURE 1

(a)

(b)

FIGURE 2

welding progression direction

FIGURE 3

FIGURE 4

## INTERNATIONAL SEARCH REPORT

| International application No. |
|---|
| **PCT/JP2022/045814** |

**A.  CLASSIFICATION OF SUBJECT MATTER**

*B23K 15/00*(2006.01)i

FI:  B23K15/00 501A

According to International Patent Classification (IPC) or to both national classification and IPC

**B.  FIELDS SEARCHED**

Minimum documentation searched (classification system followed by classification symbols)

B23K15/00-15/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2011-246804 A (NIPPON STEEL CORPORATION) 08 December 2011 (2011-12-08)<br>entire text, all drawings | 1-3 |
| A | WO 2020/145136 A1 (NIPPON STEEL CORPORATION) 16 July 2020 (2020-07-16)<br>entire text, all drawings | 1-3 |
| A | JP 2021-120473 A (NIPPON STEEL CORPORATION) 19 August 2021 (2021-08-19)<br>entire text, all drawings | 1-3 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045814**

| Patent document cited in search report | | | Publication date (day/month/year) | Patent family member(s) | | | Publication date (day/month/year) |
|---|---|---|---|---|---|---|---|
| JP | 2011-246804 | A | 08 December 2011 | US | 2013/0189536 | A1 | |
| | | | | entire text, all drawings | | | |
| | | | | WO | 2012/070354 | A1 | |
| | | | | EP | 2644732 | A1 | |
| | | | | CN | 103180475 | A | |
| | | | | KR | 10-2013-0080048 | A | |
| WO | 2020/145136 | A1 | 16 July 2020 | US | 2022/0090224 | A1 | |
| | | | | entire text, all drawings | | | |
| | | | | CN | 113302315 | A | |
| | | | | KR | 10-2021-0111805 | A | |
| JP | 2021-120473 | A | 19 August 2021 | (Family: none) | | | |

Form PCT/ISA/210 (patent family annex) (January 2015)

**EP 4 635 669 A1**

**Patent documents cited in the description**

- JP 2007021532 A
- JP 2008088504 A
- WO 2021070354 A